# EUROPEAN PATENT APPLICATION

(11) **EP 4 819 332 A1**
(43) Date of publication of application: **07.10.2026**
(21) Application number: 26726573.4
(22) Date of filing: 15.01.2026
(51) Int. Cl.: H01M 50/244, H01M 50/249

(54) **MOUNTING STRUCTURE, BATTERY APPARATUS, AND ELECTRIC DEVICE**

(30) Priority: 08.02.2025 CN 202520196023 U
(71) Applicant: Contemporary Amperex Technology Co., Limited, Ningde, Fujian 352100 (CN)
(72) Inventor: JIN, Weizhe, Ningde, Fujian 352100 (CN)
(74) Representative: Lorenz Seidler Gossel Part. mbB
(86) International application number: PCT/CN2026/072675
(87) International publication number: WO 2026/166311

(57) **Abstract**

The present application discloses a mounting structure, a battery apparatus, and a power consuming device, and relates to the field of battery technologies. The battery apparatus includes a battery box, and a plurality of battery cells, a box beam, and a mounting structure that are arranged in the battery box. A connecting hole is provided on the battery box, and the mounting structure includes a first locking member and a second locking member. An end of the first locking member is connected to the box beam, and the other end of the first locking member is pressed against an inner wall of the battery box and is disposed around the connecting hole. The second locking member is at least partially disposed outside the battery box. An end of the second locking member passes through the connecting hole and extends into the battery box to be connected to the first locking member, an assembly hole is provided on an end of the second locking member away from the first locking member, and the assembly hole is configured to be fittingly connected to a fastener of a carrier. The technical solutions provided in the present application can resolve a problem of a high risk of airtightness failure of a battery apparatus.

## Description

### CROSS-REFERENCE TO RELATED APPLICATIONS

The present application claims priority to Chinese Patent Application No. 202520196023.8 filed on February 08, 2025, which is incorporated herein by reference in its entirety.

### TECHNICAL FIELD

The present application relates to the field of battery technologies, and in particular, to a mounting structure, a battery apparatus, and a power consuming device.

### BACKGROUND

A battery apparatus is usually used in a new energy vehicle, to provide driving power for the new energy vehicle. With continuous development of new energy technologies, higher requirements are imposed on strength and reliability of new energy vehicles. As the battery apparatus is an important component of the new energy vehicle, higher requirements are also imposed on the assembly between the battery apparatus and the vehicle.

In related technologies, fixing points between the battery apparatus and the entire vehicle are mostly distributed on a periphery and a middle part of the battery apparatus, and fixing points in the middle part are connected by using a mounting structure. However, existing mounting structures have too many components, require a complex assembly process, and involve two sealing interfaces, leading to a high risk of airtightness failure of the battery apparatus.

### SUMMARY

In view of the foregoing problem, the present application provides a mounting structure, a battery apparatus, and a power consuming device, to resolve a problem of a high risk of airtightness failure of a battery apparatus.

The present application provides a battery apparatus, including a battery box, and a plurality of battery cells, a box beam, and a mounting structure that are arranged in the battery box. A connecting hole is provided on the battery box, and the mounting structure includes a first locking member and a second locking member. An end of the first locking member is connected to the box beam, and the other end of the first locking member is pressed against an inner wall of the battery box and is disposed around the connecting hole. The second locking member is at least partially disposed outside the battery box. An end of the second locking member passes through the connecting hole and extends into the battery box to be connected to the first locking member, an assembly hole is provided on an end of the second locking member away from the first locking member, and the assembly hole is configured to be fittingly connected to a fastener of a carrier.

In the technical solution of the embodiments of the present application, the mounting structure used in the technical solution of the present application implements connection only by using the first locking member and the second locking member. An end of the first locking member is directly connected to the box beam, and the other end of the first locking member is pressed against the inner wall of the battery box and is disposed around the connecting hole, so that a sealing interface is formed between the first locking member and the battery box. In addition, the second locking member is used to directly connect the battery box and the first locking member. When the battery box is connected to the carrier, the fastener on the carrier may be directly locked to the assembly hole of the second locking member. Therefore, the mounting structure used in this solution only needs to use the first locking member and the second locking member, reducing use of a bottom sleeve and an adapter sleeve, and also saving a corresponding locking and mounting process. In addition, a sealing interface between the bottom sleeve and a bottom plate of the battery box is removed, and only one sealing interface is involved, thereby effectively resolving the problem of the high risk of airtightness failure of the battery apparatus.

In some embodiments, an insertion hole is provided on an end of the box beam close to the connecting hole, and an end of the first locking member away from the second locking member is inserted into the insertion hole. In such a design, by inserting an end of the first locking member into the insertion hole of the box beam, a connection area between the first locking member and the box beam can be increased, to improve connection reliability between the first locking member and the box beam.

In some embodiments, the first locking member is welded to the box beam. In such a design, the first locking member is connected to the box beam by means of welding, which not only is easy to operate, but also makes the connection between the first locking member and the box beam more reliable in this connection manner.

In some embodiments, the first locking member is threadedly engaged with the second locking member. In such a design, during assembly, after the first locking member extends through the connecting hole on the battery box into the interior of the battery box, the first locking member can be locked to the second locking member by directly tightening the first locking member, which is simpler in operation.

In some embodiments, the first locking member is a long sleeve, the second locking member is a top sleeve, and a maximum dimension of the long sleeve in a height direction is greater than a maximum dimension of the top sleeve in the height direction; and a threaded hole is provided on an end of the long sleeve away from the box beam, external threads are provided on an outer wall of an end of the top sleeve, and the end of the top sleeve provided with the external threads is inserted into the threaded hole and is threadedly engaged with the threaded hole. In such a design, an end of the top sleeve may have a stud structure, so that the top sleeve is inserted into the threaded hole of the long sleeve in the height direction after passing through the connecting hole on the battery box, and the top sleeve is screwed, so that an end of the top sleeve of the stud structure is screwed into the threaded hole of the long sleeve, and the first locking member and the second locking member can implement threaded connection.

In some embodiments, a sealing ring is disposed on an end of the first locking member away from the box beam, and the sealing ring is pressed against an inner wall of the battery box provided with the connecting hole. In such a design, addition of the sealing ring can improve sealing between the first locking member and the battery box, to prevent an internal space of the battery box from being in communication with the connecting hole through a gap between the first locking and the battery box and being in communication with the outside through the connecting hole, thereby improving airtightness of the battery box.

In some embodiments, the assembly hole is a blind hole, and inner threads are provided on an inner wall of the blind hole. In such a design, when the battery box needs to be assembled onto the carrier, the fastener on the carrier can be directly inserted into the blind hole of the second locking member, and implements threaded cooperation with the internal thread on the blind hole, so that the battery box can be assembled onto the carrier. Because the assembly hole is the blind hole, the internal space of the battery box is not in communication with the outside through the assembly hole, and this can improve airtightness of the battery box.

In some embodiments, the connecting hole is arranged on an upper cover of the battery box. In such a design, the connecting hole is arranged on the upper cover, so that when the battery box is assembled onto the carrier, the fastener on the carrier can be directly inserted, from top to bottom, into the assembly hole of the second locking member, thereby more facilitating assembling the battery apparatus onto the carrier.

In some embodiments, the upper cover includes an upper cover body and a lifting member, a mounting hole is provided on the upper cover body, the lifting member is disposed in the mounting hole, the connecting hole is provided on the lifting member, and the lifting member is configured to support the second locking member. In such a design, the second locking is supported by the lifting member, so that a height of the second locking member can be adjusted by using the design of the lifting member. In this way, a height of an assembly surface of the second locking member is increased, and a sufficiently long locking length space is provided for the fastener of the carrier, to avoid an insufficient locking space between the fastener and the second locking member or a mismatch between the second locking member and the carrier caused by an excessively long fastener of the carrier or an excessively high locking surface, thereby improving connection reliability between the fastener of the carrier and the second locking member.

In some embodiments, the second locking member includes a first connection segment, a second connection segment, and a fixed segment. The first connection segment is connected to the first locking member. The second connection segment is connected to an end of the first connection segment, and passes through the connecting hole. The fixed segment is connected to an end of the second connection segment away from the first connection segment, where an outer diameter of the fixed segment is greater than an outer diameter of the first connection segment and an outer diameter of the second connection segment, the lifting member is located between the fixed segment and the first locking member, and the fixed segment is pressed against the lifting member. In such a design, the first connection segment may be used to connect to the first locking member, the second connecting member passes through the connecting hole of the upper cover, the fixed segment is pressed against the lifting member, and the fixed segment is supported by the lifting member to raise the height of the second locking member, so that the second locking member can be effectively connected to the first locking member and the battery box, and the second locking member is lifted.

In some embodiments, the lifting member and the upper cover body are of an integral structure. In such a design, the design of the integral structure not only can make the connection between the lifting member and the upper cover body more reliable, but also can simplify a manufacturing process.

In some embodiments, the box beam is configured to separate two battery cell groups or separate a battery cell group and an electronic control assembly, and the battery cell group includes at least one battery cell. In such a design, when some of the plurality of battery cells expand, an expansion force acts on the box beam on two sides, so that the box beam generates a pressing force to react on the battery cells, to limit an expansion amount of the battery cells, thereby improving safety performance of the battery.

The present application further provides a mounting structure. The mounting structure includes a first locking member and a second locking member. An end of the first locking member is connected to a box beam, and the other end of the first locking member is pressed against an inner wall of a battery box and is disposed around a connecting hole on the battery box. The second locking member is at least partially disposed outside the battery box. An end of the second locking member passes through the connecting hole and extends into the battery box to be connected to the first locking member, an assembly hole is provided on an end of the second locking member away from the first locking member, and the assembly hole is configured to be fittingly connected to a fastener of a carrier.

The present application further provides a power consuming device, including the foregoing battery apparatus.

The foregoing descriptions are merely an overview of the technical solutions of the present application. To understand the technical means of the present application more clearly, implementation can be performed according to content of the specification. Moreover, to make other objectives, features, and advantages of the present application more comprehensible, specific implementations of the present application are particularly described below.

### BRIEF DESCRIPTION OF THE DRAWINGS

To describe the technical solutions in embodiments of the present application or the related art more clearly, the accompanying drawings required for describing the embodiments or the related art will be briefly introduced below. Apparently, the accompanying drawings in the following description show merely some embodiments of the present application, and those of ordinary skill in the art can still derive other accompanying drawings from structures shown in these accompanying drawings without creative efforts.
FIG. 1 is a partial structural cross-segmental view of an embodiment of a battery apparatus according to the present application;
FIG. 2 is an exploded view of an embodiment of a battery apparatus according to the present application; and
FIG. 3 is a structural schematic diagram of an embodiment of a vehicle according to the present application.

### Descriptions of reference numerals:

| Reference numeral | Name | Reference numeral | Name |
|---|---|---|---|
| 1000 | Vehicle | 32 | Weld |
| 100 | Battery apparatus | 40 | Mounting structure |
| 10 | Battery box | 41 | First locking member |
| 10a | First part | 41a | Threaded hole |
| 10b | Second part | 41b | Sealing ring |
| 11 | Upper cover | 42 | Second locking member |
| 111 | Upper cover body | 42a | Assembly hole |
| 112 | Lifting member | 421 | First connection segment |
| 11a | Connecting hole | 422 | Second connection segment |
| 20 | Battery cell | 423 | Fixed segment |
| 30 | Box beam | 200 | Controller |
| 31 | Insertion hole | 300 | Motor |

The objective implementation, functional features and advantages of the present application are further illustrated with reference to the accompanying drawings by using the embodiments.

### DETAILED DESCRIPTION

The following describes embodiments of technical solutions of the present application in detail with reference to the accompanying drawings. The following embodiments are only used to illustrate the technical solutions of the present application more explicitly, and are thus only interpreted as examples, rather than used to limit the protection scope of the present application.

Unless otherwise defined, meanings of all technical and scientific terms used herein are the same as those usually understood by a person skilled in the art to which the present application belongs. The terms used herein are merely intended to describe objectives of the specific embodiments, but are not intended to limit the present application. The terms "include", "have", and any variant thereof in the description, claims, and the brief description of the drawings of the present application are intended to cover a non-exclusive inclusion.

In the descriptions of the embodiments of the present application, technical terms such as "first" and "second" are used merely for distinguishing different objects, and shall not be construed as indicating or implying relative importance or implying a quantity, a specific order, or a primary-secondary relationship of indicated technical features. In the descriptions of the embodiments of the present application, "a plurality of" means two or more, unless otherwise definitely and specifically limited.

The "embodiment" mentioned in the specification means that particular features, structures, or characteristics described with reference to the embodiment may be included in at least one embodiment of the present application. The term appearing at various positions in the specification does not necessarily refer to a same embodiment, or an independent or alternative embodiment mutually exclusive with another embodiment. A person skilled in the art explicitly or implicitly understands that the embodiments described in the specification may be combined with other embodiments.

In the descriptions of the embodiments of the present application, the term "a plurality of" means two or more (including two). Similarly, "a plurality of groups" means two or more groups (including two groups), and "a plurality of pieces" means two or more pieces (including two pieces).

In the descriptions of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicating directional or positional relationships are based on the directional or positional relationships shown in the drawings and are merely for the convenience of describing the embodiments of the present application and simplifying the description, rather than indicating or implying that the noted apparatuses or components need to have specific directions or need to be constructed and operated in specific directions. Therefore, these terms should not be construed as limitations on the embodiments of the present application.

In the descriptions of the embodiments of the present application, unless otherwise explicitly specified or defined, the technical terms such as "mount", "install", "connect", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the embodiments of the present application according to specific situations.

The battery apparatus mentioned in the art is also referred to as a battery, and may be classified into a single-use battery and a rechargeable battery according to whether the battery apparatus is rechargeable. Currently, common types of the rechargeable battery include: a lead-acid battery, a nickel-metal hydride battery, and a lithium-ion battery. Currently, the lithium-ion battery is widely applied to pure electric vehicles and hybrid vehicles. The lithium-ion battery used for this purpose has a relatively low capacity, has a large output and a large charging current, and also has a relatively long service life, but has relatively high costs.

The battery described in the embodiments of the present application is a rechargeable battery. The following mainly uses the lithium-ion battery as an example to describe the embodiments of the present application. It should be understood that, a rechargeable battery of any other suitable type is applicable to the embodiments of the present application. The battery mentioned in the embodiments of the present application may be directly or indirectly used in an appropriate apparatus to supply power to the apparatus.

The battery mentioned in the embodiments disclosed in the present application is a single physical module including one or more battery cells to provide a preset voltage and a preset capacity. A battery cell is a basic unit in the battery. Generally, battery cells are divided into cylindrical battery cells, cuboid battery cells, and pouch battery cells according to encapsulating methods. The following descriptions mainly focus on the cuboid battery cell. It should be understood that, the embodiments described below are also applicable to the cylindrical battery cells or pouch battery cells in some aspects.

The battery cell includes a positive electrode plate, a negative electrode plate, an electrolytic solution, and a separator. A lithium-ion battery cell works mainly relying on the movement of lithium ions between the positive electrode plate and the negative electrode plate. A film structure of three layers of materials in the cylindrical battery cell are wound into an electrode assembly of a cylindrical shape, while a film structure in the cuboid battery cell are wound or stacked into an electrode assembly of a roughly cuboid shape.

In a general battery cell structure, the battery cell includes a housing, an electrode assembly, and an electrolytic solution. The electrode assembly is accommodated in the housing of the battery cell, and the electrode assembly includes a positive electrode plate, a negative electrode plate, and a separator. The housing includes a shell and an end cover. The housing includes an accommodating cavity formed by a plurality of walls, and an opening. The end cover is arranged at the opening to close the accommodating cavity. In addition to the electrode assembly, the accommodating cavity further contains an electrolytic solution. The positive electrode plate and the negative electrode plate in the electrode assembly include tabs. To avoid that no fusing occurs when a large current passed through, there are a plurality of positive electrode tabs and the positive electrode tabs are laminated, and there are a plurality of negative electrode tabs and the negative electrode tabs are laminated. The tab is electrically connected to an electrode terminal located outside the battery cell through a connecting member. Electrode terminals generally include a positive electrode terminal and a negative electrode terminal. For the cuboid battery cell, the electrode terminal is generally arranged in an end cover part. The plurality of battery cells are connected in series and/or in parallel through the electrode terminals to be used in various application scenarios.

In some high-power application scenarios such as electric vehicles, applications of the battery include three layers: a battery cell, a battery module, and a battery. The battery module is formed by electrically connecting a specific quantity of battery cells together and putting them into a frame to protect the battery cells from external impact, heat, vibration, and the like. The battery refers to a final state of a battery system installed in the electric vehicle. The battery generally includes a battery box for packaging the one or more battery cells.

In recent years, new energy automobiles have been rapidly developed. In the field of electric automobiles, a power battery, as a power source of an electric automobile, plays an irreplaceable and important role. The battery includes a battery box and a plurality of battery cells accommodated in the battery box. As a core part of a new energy automobile, the battery has high requirements in terms of safety. Currently, mechanical safety of a power battery during use is one of battery safety issues that consumers are generally concerned about.

The battery provided in the embodiments of this application may be a power source of a power consuming device. The power consuming device may be a mobile phone, a portable apparatus, a laptop, an electric automobile, an electric vehicle, a ship, a spacecraft, an electronic toy, an electric tool, etc. For example, the spacecraft includes an airplane, a rocket, a space shuttle, a spaceship and the like; the electronic toy includes a fixed or mobile electronic toy, such as a game console, an electric automobile toy, an electric ship toy, an electric aircraft toy and the like; and the electric tool includes a metal-cutting power tool, a grinding power tool, an assembly power tool and a railway power tool, such as an electric drill, an electric grinder, an electric wrench, an electric screwdriver, an electric hammer, an electric impact drill, a concrete vibrator and an electric planer.

For ease of description, the following embodiments are described by using an example in which a power consuming apparatus according to an embodiment of the present application is a vehicle 1000.

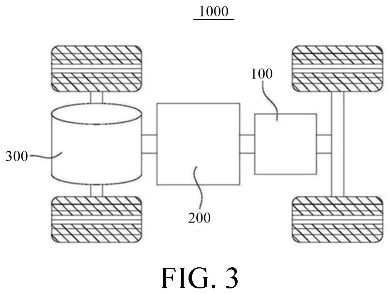

For example, FIG. 3 is a schematic structural diagram of an embodiment of the vehicle 1000. The vehicle 1000 may be a fuel vehicle, a gas vehicle, or a new energy vehicle. The new energy vehicle may be a pure electric vehicle, a hybrid electric vehicle, or an extended-range electric vehicle. A battery apparatus 100, a controller 200, and a motor 300 may be arranged inside the vehicle 1000, and the controller 200 is configured to control the battery apparatus 100 to supply power to the motor 300. For example, the battery apparatus 100 may be disposed at the bottom, head, or tail of the vehicle 1000. The battery apparatus 100 may be configured to supply power to the vehicle 1000. For example, the battery apparatus 100 may serve in a circuit system of the vehicle 1000 as an operating power supply of the vehicle 1000, for example, to provide electricity required for start-up, navigation, and operation of the vehicle 1000. In another embodiment of the present application, the battery apparatus 100 may be configured not only as an operation power supply of the vehicle 1000, but also as a driving power supply of the vehicle 1000, replacing or partially replacing fuel or natural gas to provide driving power for the vehicle 1000.

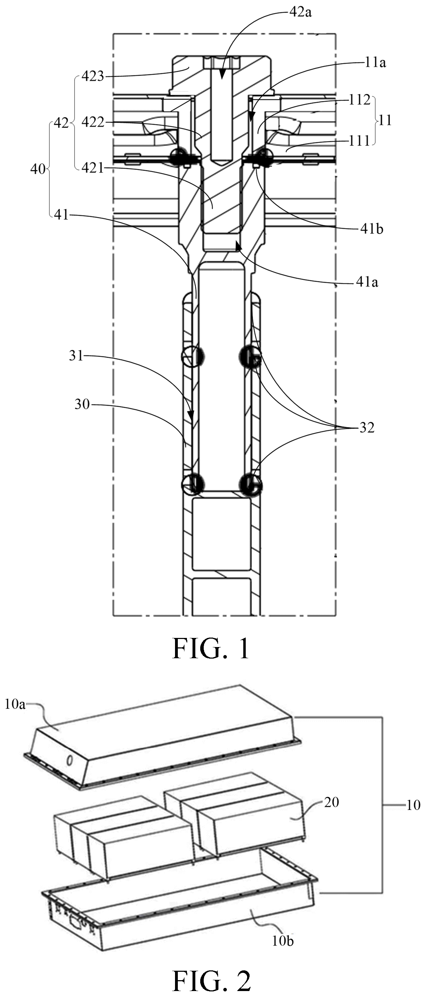

For example, referring to FIG. 2, FIG. 2 is a structural exploded view of a battery apparatus 100 according to some embodiments of the present application. The battery apparatus 100 includes a battery box 10 and a battery cell 20, and the battery box 10 has an accommodating space configured to accommodate the battery cell 20. The battery box 10 may use a plurality of structures. In some embodiments, the battery box 10 may include a first portion 10a and a second portion 10b, the first portion 10a and the second portion 10b cover each other, and the first portion 10a and the second portion 10b jointly define the accommodating space for accommodating the battery cells 20. The second portion 10b may be of a hollow structure with an opening at an end, the first portion 10a may be of a plate-like structure, and the first portion 10a covers an opening side of the second portion 10b, so that the first portion 10a and the second portion 10b jointly define the accommodating space. Alternatively, the first portion 10a and the second portion 10b each may be of a hollow structure with an opening on one side, and an opening side of the first portion 10a covers an opening side of the second portion 10b. Certainly, the battery box 11 formed by the first portion 10a and the second portion 10b may be in various shapes, such as a cylinder and a cuboid.

In the battery apparatus 100, there may be one or a plurality of battery cells 20. When there are a plurality of battery cells 20 in the battery apparatus 100, the plurality of battery cells 20 can be connected in series, parallel, or series-parallel. Series-parallel connection means that both series connection and parallel connection exist among the plurality of battery cells 20. The plurality of battery cells 20 may be directly connected in series, parallel, or series-parallel together, and then the whole formed by the plurality of battery cells 20 may be accommodated in the battery box 10. Certainly, the battery apparatus 100 may also be in the form of a battery module formed by the plurality of battery cells 20 that are first connected in series, parallel, or series-parallel. The plurality of battery modules are then connected in series, parallel, or series-parallel to form a whole and accommodated in the battery box 10.

A battery apparatus is usually used in a new energy vehicle, to provide driving power for the new energy vehicle. With continuous development of new energy technologies, higher requirements are imposed on strength and reliability of new energy vehicles. As the battery apparatus is an important component of the new energy vehicle, higher requirements are also imposed on the assembly between the battery apparatus and the vehicle.

In related technologies, fixing points between the battery apparatus and the entire vehicle are mostly distributed on a periphery and a middle part of the battery apparatus, and fixing points in the middle part are connected by using a mounting structure. The mounting structure generally includes four parts: a top sleeve, an adapter sleeve, a long sleeve, and a bottom sleeve, which are locked and fixed by threads on the sleeves. A combination of the bottom sleeve and the long sleeve is responsible for a sealing interface with the bottom (a water-cooling panel), and a combination of the top sleeve and the adapter sleeve is responsible for a sealing interface with the top (an upper cover). Therefore, existing mounting structures have too many components, require a complex assembly process, and involve two sealing interfaces, leading to a high risk of airtightness failure of the battery apparatus.

Based on the foregoing problem, the present application proposes a battery apparatus 100, to resolve a problem of a high risk of airtightness failure of the battery apparatus 100. Descriptions are provided below in detail with reference to the specific accompanying drawings and embodiments.

Referring to FIG. 1, in an embodiment of the present application, the battery apparatus 100 includes a battery box 10, and a plurality of battery cells 20, a box beam 30, and a mounting structure 40 that are arranged in the battery box 10. A connecting hole 11a is disposed in the battery box 10, and the mounting structure 40 includes a first locking member 41 and a second locking member 42. An end of the first locking member 41 is connected to the box beam 30, and the other end of the first locking member 41 is pressed against an inner wall of the battery box 10 and is disposed around the connecting hole 11a. The second locking member 42 is at least partially disposed outside the battery box 10. An end of the second locking member 42 passes through the connecting hole 11a and extends into the battery box 10 to be connected to the first locking member 41, an assembly hole 42a is disposed on an end of the second locking member 42 away from the first locking member 41, and the assembly hole 42a is configured to be fittingly connected to a fastener of a carrier.

The box beam 30 refers to a structure used for separating an inner space of the battery box 10, and may also be referred to as an expansion beam. Optionally, there are at least two expansion beams. The at least two expansion beams are arranged in the battery box 10 at an interval. The battery cell 20 is clamped between the at least two expansion beams, so that the at least two expansion beams cooperate to clamp the battery cell 20.

The expansion beam is a component used for limiting an expansion amount of the battery cell 20. The expansion beam may be a metal piece. It may be understood that a material of the expansion beam is metal, for example, aluminum, an aluminum alloy, iron, stainless steel, or copper. This is not specifically limited herein. Certainly, the expansion beam may alternatively be a non-metal piece. It may be understood that the material of the expansion beam is non-metal, for example, plastic, carbon fiber, or wood. This is not specifically limited herein. In addition, when there are at least two expansion beam, materials of the at least two expansion beam may be the same or may be different.

When some of the plurality of battery cells 20 expand, an expansion force acts on the expansion beam on two sides, so that the expansion beam generates a pressing force to react on the battery cells 20, to limit an expansion amount of the battery cells 20, thereby improving safety performance of the battery.

The mounting structure 40 refers to a structure used for assembling the battery box 10 onto the carrier, and is used as a middle fixing point of the battery box 10.

The first locking member 41 refers to a structural member used for locking to the box beam 30. The first locking member 41 may be a connecting sleeve, or may be a locking member such as a nut or a screw, provided that the first locking member 41 can be connected to the box beam 30 and can fit with the second locking member 42. The first locking member 41 may be connected to the box beam 30 by means such as welding, threaded connection, clamping, or adhesion.

The second locking member 42 refers to a structure used for locking to the battery box 10. The second locking member 42 may be a connecting sleeve, or may be a locking member such as a nut or a screw, provided that the second locking member 42 can be connected to the battery box 10 and can fit with the first locking member 41. The second locking member 42 may be connected to the first locking member 41 by means such as threaded connection or clamping.

The faster is a connecting structural member used for connecting the carrier to the battery box 10, and may be a stud.

During actual application, the connecting hole 11a may be disposed on the upper cover 11 of the battery box 10, or may be disposed on a side wall of the battery box 10.

In conclusion, in the technical solution of the embodiments of the present application, the mounting structure 40 used in the technical solution of the present application implements connection only by using the first locking member 41 and the second locking member 42. An end of the first locking member 41 is directly connected to the box beam 30, and the other end of the first locking member 41 is pressed against the inner wall of the battery box 10 and is disposed around the connecting hole 11a, so that a sealing interface is formed between the first locking member 41 and the battery box 10. In addition, the second locking member 42 is used to directly connect the battery box 10 and the first locking member 41. When the battery box 10 is connected to the carrier, the fastener on the carrier may be directly locked to the assembly hole 42a of the second locking member 42. Therefore, the mounting structure 40 used in this solution only needs to use the first locking member 41 and the second locking member 42, reducing use of a bottom sleeve and an adapter sleeve, and also saving a corresponding locking and mounting process. In addition, a sealing interface between the bottom sleeve and a bottom plate of the battery box 10 is removed, and only one sealing interface is involved, thereby effectively resolving the problem of the high risk of airtightness failure of the battery apparatus 100.

Referring to FIG. 1, in an embodiment of the present application, an insertion hole 31 is disposed on an end of the box beam 30 close to the connecting hole 11a, and an end of the first locking member 41 away from the second locking member 42 is inserted into the insertion hole 31.

In this embodiment, the box beam 30 may be a solid beam or a profile beam. When the box beam 30 is the solid beam, the insertion hole 31 on the box beam 30 may be an opening disposed at an end of the box beam 30; when the box beam 30 is the profile beam, the insertion hole 31 on the box beam 30 may be a cavity of the profile beam.

In such a design, by inserting an end of the first locking member 41 into the insertion hole 31 of the box beam 30, a connection area between the first locking member 41 and the box beam 30 can be increased, to improve connection reliability between the first locking member 41 and the box beam 30.

Referring to FIG. 1, in an embodiment of the present application, the first locking member 41 is welded to the box beam 30.

In such a design, the first locking member 41 is connected to the box beam 30 by means of welding, which not only is easy to operate, but also makes the connection between the first locking member 41 and the box beam 30 more reliable in this connection manner.

During actual application, the first locking member 41 may be welded on the box beam 30 by means of spot welding, arc welding, and laser welding. Certainly, in an embodiment, the first locking member 41 may be connected to the box beam 30 in a welding manner of spot welding. This manner can reduce welding costs while improving connection reliability. For example, a plurality of welds 32 are formed between the first locking member 41 and the insertion hole 31 of the box beam 30. The plurality of welds 32 may be distributed at intervals along an axial direction of the first locking member 41, to separately perform spot welding at the plurality of welds 32, so that the plurality of welds are formed between the first locking member 41 and the box beam 30.

Referring to FIG. 1, in an embodiment of the present application, the first locking member 41 is threadedly engaged with the second locking member 42.

In such a design, during assembly, after the first locking member 41 extends through the connecting hole 11a of the battery box 10 into the interior of the battery box 10, the first locking member 41 can be locked to the second locking member 42 by directly tightening the first locking member 41, which is simpler in operation.

During actual application, a threaded hole 41a may be disposed on the first locking member 41, and a stud may be disposed on the second locking member 42, so that the stud of the second locking member 42 matches the threaded hole 41a of the first locking member 41. Alternatively, a stud may be disposed on the first locking member 41, and a threaded hole 41a may be disposed on the second locking member 42, so that the stud on the first locking member 41 matches the threaded hole 41a of the second locking member 42.

Referring to FIG. 1, in an embodiment of the present application, the first locking member 41 is a long sleeve, the second locking member 42 is a top sleeve, and a maximum dimension of the long sleeve in a height direction is greater than a maximum dimension of the top sleeve in the height direction; and a threaded hole 41a is disposed on an end of the long sleeve away from the box beam 30, external threads are provided on an outer wall of an end of the top sleeve, and the end of the top sleeve provided with the external threads is inserted into the threaded hole 41a and is threadedly engaged with the threaded hole 41a.

In such a design, an end of the top sleeve may have a stud structure, so that the top sleeve is inserted into the threaded hole 41a of the long sleeve in the height direction after passing through the connecting hole 11a of the battery box 10, and the top sleeve is screwed, so that an end of the top sleeve of the stud structure is screwed into the threaded hole 41a of the long sleeve, and the first locking member 41 and the second locking member 42 can implement threaded connection. In addition, the maximum dimension of the long sleeve in the height direction is greater than the maximum dimension of the top sleeve in the height direction, so that the threaded hole 41a of the first locking member 41 can be set to be sufficiently long. After the top sleeve passes through the connecting hole 11a of the battery box 10 and is inserted into the threaded hole 41a of the long sleeve in the height direction, so that locking between the second locking member 42 and the first locking member 41 is more reliable.

Referring to FIG. 1, in an embodiment of the present application, a sealing ring 41b is disposed on an end of the first locking member 41 away from the box beam 30, and the sealing ring 41b is pressed against an inner wall of the battery box 10 provided with the connecting hole 11a.

The sealing ring 41b is used for sealing a gap between the end of the first locking member 41 and the inner wall of the battery box 10 provided with the connecting hole 11a, to seal a sealing interface between the first locking member 41 and the battery box 10. The sealing ring 41b may be a silicone ring or a rubber ring.

In such a design, addition of the sealing ring 41b can improve sealing between the first locking member 41 and the battery box 10, to prevent an internal space of the battery box 10 from being in communication with the connecting hole 11a through a gap between the first locking and the battery box 10 and being in communication with the outside through the connecting hole 11a, thereby improving airtightness of the battery box 10.

Referring to FIG. 1, in an embodiment of the present application, the assembly hole 42a is a blind hole, and inner threads are provided on an inner wall of the blind hole.

In such a design, when the battery box 10 needs to be assembled onto the carrier, the fastener on the carrier can be directly inserted into the blind hole of the second locking member 42, and implements threaded cooperation with the internal thread on the blind hole, so that the battery box 10 can be assembled onto the carrier. Because the assembly hole 42a is the blind hole, the internal space of the battery box 10 is not in communication with the outside through the assembly hole 42a, and this can improve airtightness of the battery box 10.

Referring to FIG. 1, in an embodiment of the present application, the connecting hole 11a is arranged on an upper cover 11 of the battery box 10.

In this embodiment, the connecting hole 11a is arranged at a position of the upper cover 11 corresponding to the box beam 30, so that the connecting hole 11a is arranged corresponding to the first locking member 41 connected to the box beam 30, and the second locking member 42 is conveniently connected to the first locking member 41 after passing through the connecting hole 11a.

In such a design, the connecting hole 11a is arranged on the upper cover 11, so that when the battery box 10 is assembled onto the carrier, the fastener on the carrier can be directly inserted, from top to bottom, into the assembly hole 42a of the second locking member 42, thereby more facilitating assembling the battery apparatus 100 onto the carrier.

Referring to FIG. 1, in an embodiment of the present application, the upper cover 11 includes an upper cover body 111 and a lifting member 112, a mounting hole is provided on the upper cover body 111, the lifting member 112 is disposed in the mounting hole, the connecting hole 11a is disposed on the lifting member 112, and the lifting member 112 is configured to support the second locking member 42.

The lifting member 112 is used for supporting the second locking member 42, to lift the height of the second locking member 42. The lifting member 112 is provided with a connecting hole 11a, so that the lifting member 112 has a sleeve-like structure. The lifting member 112 may be of an integral structure with the upper cover body 111, or may be of separated structures with the upper cover body 111, and is connected to the upper cover body 111 by means such as welding, adhesion, or threaded connection.

In such a design, the second locking is supported by the lifting member 112, so that a height of the second locking member 42 can be adjusted by using the design of the lifting member 112. In this way, a height of an assembly surface of the second locking member 42 is increased, and a sufficiently long locking length space is provided for the fastener of the carrier, to avoid an insufficient locking space between the fastener and the second locking member 42 or a mismatch between the second locking member 42 and the carrier caused by an excessively long fastener of the carrier or an excessively high locking surface, thereby improving connection reliability between the fastener of the carrier and the second locking member 42.

Referring to FIG. 1, in an embodiment of the present application, the second locking member 42 includes a first connection segment 421, a second connection segment 422, and a fixed segment 423. The first connection segment 421 is connected to the first locking member 41. The second connection segment 422 is connected to an end of the first connection segment 421, and passes through the connecting hole 11a. The fixed segment 423 is connected to an end of the second connection segment 422 away from the first connection segment 421, where an outer diameter of the fixed segment 423 is greater than an outer diameter of the first connection segment 421 and an outer diameter of the second connection segment 422, the lifting member 112 is located between the fixed segment 423 and the first locking member 41, and the fixed segment 423 is pressed against the lifting member 112.

In such a design, the first connection segment 421 may be used to connect to the first locking member 41, the second connecting member passes through the connecting hole 11a of the upper cover 11, the fixed segment 423 is pressed against the lifting member 112, and the fixed segment 423 is supported by the lifting member 112 to raise the height of the second locking member 42, so that the second locking member 42 can be effectively connected to the first locking member 41 and the battery box 10, and the second locking member 42 is lifted.

In some embodiments, the outer diameter of the first connection segment 421 is smaller than the outer diameter of the second connection segment 422, and the outer diameter of the second connection segment 422 is smaller than the outer diameter of the fixed segment 423. In this way, in an installation process, it is convenient for the first connection segment 421 to be successfully connected to the first locking member 41 after passing through the connecting hole 11a, and for the second connection segment 422 to pass through the connecting hole 11a, and the fixed segment 423 is pressed on an end surface on an outer side of the lifting member 112.

Referring to FIG. 1, in an embodiment of the present application, the lifting member 112 and the upper cover body 111 are of an integral structure.

In such a design, the design of the integral structure not only can make the connection between the lifting member 112 and the upper cover body 111 more reliable, but also can simplify a manufacturing process.

In some embodiments, the lifting member 112 includes a first structural member and a second structural member that are connected along an axial direction. An outer diameter of the first structural member is greater than an outer diameter of the second structural member, so that a cross segment of the lifting member 112 has a T-shaped design. In this way, a contact area between the first structural member and the upper cover body 111 can be increased, to increase a connection area between the lifting member 112 and the upper cover body 111, thereby improving connection reliability between the lifting member 112 and the upper cover body 111.

Referring to FIG. 1, in an embodiment of the present application, the box beam 30 is configured to separate two battery cell groups or separate a battery cell group and an electronic control assembly, and the battery cell group includes at least one battery cell 20.

In such a design, when some of the plurality of battery cells 20 expand, an expansion force acts on the box beam 30 on two sides, so that the box beam 30 generates a pressing force to react on the battery cells, to limit an expansion amount of the battery cells 20, thereby improving safety performance of the battery.

Referring to FIG. 1, the present application further proposes a mounting structure 40. The mounting structure 40 includes a first locking member 41 and a second locking member 42. An end of the first locking member 41 is connected to a box beam 30, and the other end of the first locking member 41 is pressed against an inner wall of a battery box 10 and is disposed around a connecting hole 11a of the battery box 10. The second locking member 42 is at least partially disposed outside the battery box 10. An end of the second locking member 42 passes through the connecting hole 11a and extends into the battery box 10 to be connected to the first locking member 41, an assembly hole 42a is disposed on an end of the second locking member 42 away from the first locking member 41, and the assembly hole 42a is configured to be fittingly connected to a fastener of a carrier.

According to some embodiments of the present application, the present application provides a battery apparatus 100 including a mounting structure 40. Referring to FIG. 1, the battery apparatus 100 further includes a battery box 10, a plurality of battery cells 20 and a box beam 30 that are disposed in the battery box 10. The box beam 30 is configured to separate two battery cell groups, or separate a battery cell group and an electronic control assembly. The battery cell group includes at least one battery cell 20, a connecting hole 11a is disposed on an upper cover 11 of the battery box 10, and the mounting structure 40 includes a first locking member 41 and a second locking member 42. An end of the first locking member 41 is welded to the box beam 30, a sealing ring 41b is disposed between the other end of the first locking member 41 and the inner wall of the upper cover 11, and the sealing ring 41b is disposed around the connecting hole 11a. An end of the second locking member 42 passes through the connecting hole 11a and extends into the battery box 10, to form a threaded connection with the first locking member 41. A blind hole is provided on an end of the second locking member 42 away from the first locking member 41, and the blind hole is configured to be fittingly connected to a fastener of a carrier. The upper cover 11 includes an upper cover body 111 and a lifting member 112, a mounting hole is provided on the upper cover body 111, the lifting member 112 is disposed in the mounting hole, the connecting hole 11a is disposed on the lifting member 112, and the lifting member 112 is configured to support the second locking member 42.

In the technical solution of the embodiments of the present application, the mounting structure 40 used in the technical solution of the present application implements connection only by using the first locking member 41 and the second locking member 42. An end of the first locking member 41 is directly welded to the box beam 30, and the other end of the first locking member 41 is sealed with the inner wall of the upper cover 11 by using the sealing ring 41b, so that a sealing interface is formed between the first locking member 41 and the battery box 10, to improve sealing of the sealing interface. In addition, the second locking member 42 is used to directly connect the battery box 10 and the first locking member 41. When the battery box 10 is connected to the carrier, the fastener on the carrier may be directly locked to the blind hole of the second locking member 42. Therefore, the mounting structure 40 used in this solution only needs to use the first locking member 41 and the second locking member 42, reducing use of a bottom sleeve and an adapter sleeve, and also saving a corresponding locking and mounting process. In addition, a sealing interface between the bottom sleeve and a bottom plate of the battery box 10 is removed, and only one sealing interface is involved, thereby effectively resolving the problem of the high risk of airtightness failure of the battery apparatus 100. In addition, the second locking member 42 is supported by using the lifting member 112, so that a height of the second locking member 42 can be adjusted by using the design of the lifting member 112, a height of an assembly surface of the second locking member 42 is increased, and a locking length space that is sufficiently long is provided for the fastener of the carrier, to avoid that the locking space between the fastener and the second locking member 42 is insufficient or the second locking member 42 and the carrier do not matched due to an excessively long fastener of the carrier or an excessively high locking height surface, thereby improving connection reliability between the fastener of the carrier and the second locking member 42.

The present application further provides a power consuming device. The power consuming device includes a battery apparatus 100. For a specific structure of the battery apparatus 100, refer to the foregoing embodiments. Because the power consuming device uses all technical solutions of all the foregoing embodiments, the power consuming device at least has all beneficial effects brought by the technical solutions of the foregoing embodiments, which are not described herein again one by one.

The above description is only the exemplary embodiments of the present application, which does not limit the patent scope of the present application. Any equivalent structure transformations made by using the contents of the specification of the present application and the accompanying drawings based on the technical idea of the present application, or directly or indirectly applied to other related technical fields, are all included in the patent scope of protection of the present application.

## Claims

1. A battery apparatus, comprising a battery box and a plurality of battery cells, a box beam, and a mounting structure that are arranged in the battery box, wherein a connecting hole is provided on the battery box, and the mounting structure comprises:
a first locking member, wherein an end of the first locking member is connected to the box beam, and the other end of the first locking member is pressed against an inner wall of the battery box and is disposed around the connecting hole; and
a second locking member, at least partially disposed outside the battery box, wherein an end of the second locking member passes through the connecting hole and extends into the battery box to be connected to the first locking member, an assembly hole is provided on an end of the second locking member away from the first locking member, and the assembly hole is configured to be fittingly connected to a fastener of a carrier.

2. The battery apparatus according to claim 1, wherein an insertion hole is provided on an end of the box beam close to the connecting hole, and an end of the first locking member away from the second locking member is inserted into the insertion hole.

3. The battery apparatus according to claim 1, wherein the first locking member is welded to the box beam.

4. The battery apparatus according to claim 1, wherein the first locking member is threadedly engaged with the second locking member.

5. The battery apparatus according to claim 4, wherein the first locking member is a long sleeve, the second locking member is a top sleeve, and a maximum dimension of the long sleeve in a height direction is greater than a maximum dimension of the top sleeve in the height direction; and
a threaded hole is provided on an end of the long sleeve away from the box beam, external threads are provided on an outer wall of an end of the top sleeve, and the end of the top sleeve provided with the external threads is inserted into the threaded hole and is threadedly engaged with the threaded hole.

6. The battery apparatus according to any one of claims 1 to 5, wherein a sealing ring is disposed on an end of the first locking member away from the box beam, and the sealing ring is pressed against an inner wall of the battery box provided with the connecting hole.

7. The battery apparatus according to any one of claims 1 to 5, wherein the assembly hole is a blind hole, and inner threads are provided on an inner wall of the blind hole.

8. The battery apparatus according to any one of claims 1 to 5, wherein the connecting hole is provided on an upper cover of the battery box.

9. The battery apparatus according to claim 8, wherein the upper cover comprises an upper cover body and a lifting member, a mounting hole is provided on the upper cover body, the lifting member is disposed in the mounting hole, the connecting hole is provided on the lifting member, and the lifting member is configured to support the second locking member.

10. The battery apparatus according to claim 9, wherein the second locking member comprises:
a first connection segment, connected to the first locking member;
a second connection segment, connected to an end of the first connection segment, and passing through the connecting hole; and
a fixed segment, connected to an end of the second connection segment away from the first connection segment, wherein an outer diameter of the fixed segment is greater than an outer diameter of the first connection segment and an outer diameter of the second connection segment, the lifting member is located between the fixed segment and the first locking member, and the fixed segment is pressed against the lifting member.

11. The battery apparatus according to claim 9, wherein the lifting member and the upper cover body are of an integral structure.

12. The battery apparatus according to any one of claims 1 to 5, wherein the box beam is configured to separate two battery cell groups or separate a battery cell group and an electronic control assembly, and the battery cell group comprises at least one battery cell.

13. A mounting structure, comprising:
a first locking member, wherein an end of the first locking member is connected to a box beam, and the other end of the first locking member is pressed against an inner wall of a battery box and is disposed around a connecting hole on the battery box; and
a second locking member, at least partially disposed outside the battery box, wherein an end of the second locking member passes through the connecting hole and extends into the battery box to be connected to the first locking member, an assembly hole is provided on an end of the second locking member away from the first locking member, and the assembly hole is configured to be fittingly connected to a fastener of a carrier.

14. A power consuming device, comprising the battery apparatus according to any one of claims 1 to 12.
